# DEMANDE DE BREVET EUROPEEN

(11) **EP 4 273 819 A1**
(43) Date de publication de la demande: **08.11.2023**
(21) Numéro de dépôt: 23169819.2
(22) Date de dépôt: 25.04.2023
(51) Int. Cl.: G07C 9/00, H02B 1/50, H04Q 1/02

(54) **SYSTÈME ET PROCÉDÉ DE COMMANDES DE DÉVERROUILLAGE ET REVERROUILLAGE DE PORTE D'UN ESPACE CLOS**

(30) Priorité: 02.05.2022 FR 2204155
(71) Demandeur: Ndiaye, Ismaila, 75011 Paris (FR)
(72) Inventeur: Ndiaye, Ismaila, 75011 Paris (FR)
(74) Mandataire: Santarelli

(57) **Abrégé**

Un système de commande (1) de déverrouillage d'une porte d'espace clos reçoit un signal de demande (41) de déverrouillage de la porte et un indicateur de position (42) ouverte ou fermée de cette porte. Il vérifie ce signal et lorsque la porte est en position fermée et des conditions de validation de déverrouillage sont remplies par ce signal, génère une instruction (43) de déverrouillage et la transmet. Il reçoit aussi un signal de demande (41) de reverrouillage de la porte temporellement dissociable d'un passage de l'indicateur de position de la position ouverte à la position fermée, vérifie ce signal, génère une instruction (43) de reverrouillage lorsqu'une position fermée est indiquée et des conditions de validation de reverrouillage sont remplies par ce signal, et la transmet.

Applications à la sécurisation d'armoires de rue pour fibre optique.

## Description

### Domaine Technique

La présente invention concerne la sécurisation d'espaces clos par commandes de déverrouillage et de reverrouillage de portes. Elle s'applique en particulier à la sécurisation d'armoires de rue, notamment utilisées pour des réseaux de fibre optique.

### État de la technique

L'extension des réseaux de communication à très haut débit (THD) a conduit à étendre les infrastructures de fibre optique. En France, notamment, des opérateurs de réseau sont en charge du déploiement de la fibre dans les dernières étapes de raccordement : un opérateur d'infrastructure assure les connexions de maisons dans un quartier, tandis qu'un opérateur d'immeuble installe la fibre dans un immeuble (les deux types d'opérateurs étant notés OI). Des opérateurs commerciaux (OC) exploitent les réseaux déployés par les OI et peuvent ainsi proposer des offres d'accès THD aux habitants. Ils remplissent alors la fonction de fournisseurs d'accès à Internet (FAI), et peuvent aussi proposer divers autres services accessibles par la fibre tels que télévision ou téléphonie. En pratique, un OI peut permettre l'accès au réseau à divers OC, et est même obligé de permettre aux autres opérateurs de se raccorder sans discrimination via des accords de mutualisation, en respectant un principe de neutralité technologique.

La jonction entre un réseau local sous la responsabilité de l'OI et des réseaux non mutualisés des OC en provenance de noeuds de raccordement optique (NRO) respectifs est effectuée au niveau d'un point de mutualisation (PM), chaque NRO établissant un lien entre le réseau national optique et un réseau de distribution d'un OC. À partir du PM, l'OI peut établir les liaisons avec des bâtiments via des points de raccordement (PR) puis à des étages de ces bâtiments via des points de branchement optique (PBO) ou boîtiers d'étage, avant de connecter des appartements ou des pièces des étages via des points de terminaison optiques (PTO). Des abonnés peuvent ainsi bénéficier de services de fibre optique THD jusqu'au domicile, désignés par services FTTH (pour « Fiber To The Home »).

Le PM remplit une fonction de sous-répartiteur optique, et peut être localisé dans un immeuble quand le nombre de logements est suffisant (actuellement supérieur à 12 en France), ou dans une armoire de rue sinon.

Les armoires dédiées à la fibre optique, également appelées armoires fibre, se sont ainsi multipliées ces dernières années en France comme dans d'autres pays. Elles nécessitent de fréquentes interventions de raccordement, entretien ou manipulation. Par exemple, la connexion entre les fibres optiques des abonnés et celles des OC peut être effectuée par soudure ou brassage. Les opérations requises sont souvent confiées en sous-traitance à des techniciens de sociétés spécialisées.

Avec la multiplication des armoires fibre et des interventions, un problème majeur est cependant l'état et la protection des armoires et de leurs contenus, tout particulièrement celles sur la voie publique, dites armoires de rue. De fait, de nombreuses détériorations sont souvent constatées sur les armoires et sur les fils, pénalisant le bon fonctionnement du réseau.

Pour empêcher des dégradations, les opérateurs se sont efforcés de sécuriser les armoires fibre. Leur ouverture a généralement été restreinte par l'utilisation de serrures mécaniques ou de cadenas, et de processus contrôlés pour obtenir les clés associées. Ce type de protection s'est cependant avéré bien souvent inefficace, et les dégradations se sont poursuivies. Il semble même qu'il ne soit pas rare que certains techniciens détériorent eux-mêmes les mécanismes de fermeture lorsqu'ils ne disposent pas des clés, ou laissent les portes ouvertes pour simplifier l'accès aux techniciens qui leur succèdent. L'identification des responsabilités s'avère par ailleurs complexe, puisqu'il est difficile d'incriminer des personnes ou des sociétés en raison de la fréquence relativement élevée des interventions.

Des solutions ont été proposées afin de mieux sécuriser les armoires fibre, tout en en rendant l'accès plus flexible pour les techniciens. Des serrures électroniques ont ainsi été expérimentées, associées à des applications dédiées dont les techniciens doivent disposer pour ouvrir les portes des armoires, par exemple au moyen de leur téléphone portable. Un avantage additionnel de ce type de solutions est qu'il rend possible un suivi des interventions et permet de mieux cerner les responsabilités en cas d'anomalies. De plus, les serrures électroniques peuvent être relativement faciles à installer et polyvalentes, puisque leur différenciation peut être effectuée par voie électronique ou numérique.

L'installation de détecteurs d'ouverture et fermeture de portes des armoires fibre connectés à des centres de surveillance a également été testée, ce qui permet de repérer rapidement la présence d'armoires mal refermées et de déclencher des messages d'alerte en vue d'interventions rapides.

Ces solutions de sécurisation misant à la fois sur l'électronique et la mise en réseau sont prometteuses. Elles posent cependant des difficultés nouvelles. En particulier, l'alimentation en énergie des systèmes de commande impose des dépenses additionnelles, augmente la consommation collective, risque de s'avérer complexe dans certains environnements et peut conduire à des défaillances pénalisantes en cas de pannes. Pour simplifier le fonctionnement et l'installation de tels systèmes, il a été proposé de s'appuyer sur des appareils autonomes, disposant de batteries appropriées. Ces solutions génèrent cependant d'autres risques, puisque les systèmes de commande sont susceptibles d'être paralysés lorsque les batteries s'épuisent, et requièrent des ressources suffisantes pour faire face aux fréquentes sollicitations potentielles. Il est donc déterminant que ces batteries disposent d'une durée de vie et de performances appropriées, en plus d'une gestion de suivi pertinente relative à leur réalimentation ou leur remplacement.

On s'est par ailleurs appuyé sur des réseaux de communication permettant de limiter autant que possible les besoins en énergie tout en couvrant de larges étendues. On a ainsi eu recours à des réseaux étendus à basse consommation ou LPWAN (pour « Low Power, Wide Area Network »), sans fil, connus pour leurs applications dans l'Internet des objets et la communication inter-machines ou M2M (pour « Machine to Machine »). En France, de tels réseaux incluent par exemple le protocole de communication radio utilisant la technologie commercialisée sous le nom « LoRa^{®} » ou celle propriétaire développée par la société Sigfox.

Malgré ces efforts pour rendre autonomes les systèmes de commande de déverrouillage et réduire leur consommation, les difficultés et les risques évoqués ci-dessus en termes de niveaux de consommation, d'épuisement des batteries et d'usure des matériels restent déterminants.

Qui plus est, non seulement le rythme d'interventions sur les armoires de rue est relativement élevé, mais chaque intervention est susceptible de provoquer des consommations d'énergie plus élevées que le plancher de dépenses prévisible. En effet, pour éviter des ouvertures intempestives ou que les protections contre les ouvertures de portes deviennent inefficaces en raison de la circulation incontrôlée de clés électroniques, des moyens de sécurisation additionnels ont été envisagés, tels que des codes à entrer sur clavier ou des dispositifs mécaniques nécessitant un matériel spécifique. Ces précautions tendent à augmenter les besoins de consommation des systèmes locaux de commande, non seulement en raison des sollicitations plus élevées directement requises du fait de moyens de sécurisation additionnels, mais également parce qu'il faut s'attendre à ce qu'un technicien ait besoin d'activer plus d'une fois au cours d'une même intervention les ressources électroniques d'ouverture de porte. En plus d'erreurs de saisie, il peut en effet arriver que le technicien préfère fermer l'armoire quelques instants le temps d'aller chercher du matériel ou de vérifier des documents, par exemple en cas d'intempéries, de risques d'intrusions d'animaux, ou pour éviter que des enfants présents à proximité ne se blessent. Les opérations d'ouverture sont alors ensuite à renouveler.

Ainsi, ce qui est gagné en simplicité et flexibilité de mise en place et de suivi des serrures électroniques au regard de serrures mécaniques est en partie perdu en raison de problèmes d'énergie et de pérennité des matériels, qui entraînent de nouveaux défis de fiabilité, de consommation d'énergie et de complexité de gestion pour le déverrouillage et le contrôle d'ouverture.

La sécurisation des armoires fibre, et plus particulièrement des armoires de rue, reste donc un sujet sensible.

Comme on peut aisément le concevoir, les mêmes problématiques, solutions et difficultés associées peuvent être transposées à la sécurisation de toutes sortes d'autres espaces clos. Dans le domaine de la fibre optique, cela peut concerner aussi la protection des NRO. D'autres espaces de travail nécessitant l'intervention de techniciens peuvent également être concernés, par exemple des armoires de câblage électrique, ou de raccordements de communication par câble ou par liaison filaire associée à la technologie DSL (pour « Digital Subscriber Line »). Les mêmes technologies peuvent aussi être utilisées pour la sécurisation de locaux, par exemple destinés à recevoir du matériel d'entretien ou des équipements sportifs.

Dans ces différentes situations, les problématiques de sécurisation des espaces clos par serrures électroniques telles que développées ci-dessus s'avèrent critiques, d'autant plus lorsqu'une alimentation en énergie n'est pas disponible sur place.

### Résumé

Le présent descriptif a en particulier pour objet de surmonter les difficultés et inconvénients mentionnés plus haut avec les systèmes existants de commande de déverrouillage de porte, exploités pour l'accès sécurisé à des espaces clos. Il est particulièrement centré sur l'amélioration potentielle de consommation d'énergie de tels systèmes, dès lors qu'une alimentation en énergie est requise pour leur fonctionnement.

Ses champs d'applications potentiels couvrent la sécurisation d'armoires de rue faisant office de PM (points de mutualisation) dans le domaine de la fibre optique, mais s'étendent également à des armoires fibre installées dans des bâtiments, à des NRO (noeuds de raccordement optique), et à d'autres types d'espaces de travail ou de locaux constituant des espaces clos.

Les applications potentielles visent de tels espaces clos disposés dans des lieux dans lesquels l'alimentation régulière en énergie s'avère relativement délicate à installer ou maintenir, par exemple des endroits isolés ou l'espace public, mais également dans des lieux où cette alimentation est immédiatement et facilement disponible, pour des raisons d'économie d'énergie.

De plus, le descriptif vise des systèmes de commande liés à des serrures électroniques, mais peut aussi concerner d'autres sortes de dispositifs de verrouillage, tels que notamment des serrures à commande optique.

Dans des modes particuliers, l'invention rend possible une gestion fiable et sécurisée des commandes de déverrouillage, en allégeant la maintenance des dispositifs et en réduisant leur besoin en énergie.

D'autre part, dans certaines réalisations, l'invention permet un allégement des opérations de déverrouillage, par exemple pour un technicien intervenant dans un espace de travail et devant plus d'une fois en ouvrir et en fermer l'accès.

A cet effet, le descriptif a pour objet un système de commande de déverrouillage d'une porte d'un espace clos. Le système comprend :
- au moins une entrée adaptée à recevoir un signal de demande de déverrouillage de cette porte, et un indicateur de position de la cette porte parmi une position ouverte et une position fermée prévu pour au moins identifier des transitions entre la position ouverte et la position fermée,
- au moins un processeur configuré pour vérifier le signal de demande de déverrouillage reçu au regard de conditions de validation de déverrouillage et générer une instruction de déverrouillage lorsque l'indicateur de position reçu indique la position fermée et les conditions de validation de déverrouillage sont remplies par le signal de demande de déverrouillage reçu, et
- au moins une sortie adaptée à transmettre l'instruction de déverrouillage de cette porte.

Selon le descriptif :
- la ou les entrée(s) est (ou sont) adaptée(s) à recevoir un signal de demande de reverrouillage de cette porte temporellement dissociable d'un passage de l'indicateur de position de la position ouverte à la position fermée,
- le(s) processeur(s) est (ou sont) configuré(s) pour vérifier le signal de demande de reverrouillage reçu au regard de conditions de validation de reverrouillage et générer une instruction de reverrouillage lorsque l'indicateur de position reçu indique la position fermée et les conditions de validation de reverrouillage sont remplies par le signal de demande de reverrouillage reçu,
- la ou les sortie(s) est (ou sont) adaptée(s) à transmettre l'instruction de reverrouillage de cette porte.

Par « déverrouillage », on entend un déblocage d'un moyen d'ouverture de la porte et par « reverrouillage », une réactivation de blocage d'ouverture. Le déverrouillage et l'ouverture sont donc deux opérations potentiellement dissociées l'une de l'autre, l'ouverture de la porte ne pouvant s'effectuer qu'une fois le déverrouillage réalisé. De plus, reverrouillage et fermeture sont deux opérations expressément dissociées l'une de l'autre, le reverrouillage de la porte ne pouvant être effectif qu'après fermeture de celle-ci.

Dans certains modes, le verrouillage est effectué par des moyens mécaniques commandés par un dispositif électronique, ce type de fonctionnement étant désigné par « verrou électronique ». Les instructions de déverrouillage et de reverrouillage sont alors adaptés à agir sur le dispositif électronique, ce qui peut être mis en oeuvre par exemple par le biais d'un commutateur du type SPST (pour « Simple Pole, Single Throw »).

Le système de commande rend donc possible non seulement une dissociation temporelle des opérations de déverrouillage et d'ouverture, mais aussi une dissociation temporelle des opérations de fermeture et de reverrouillage. Par conséquent, le reverrouillage n'est pas systématiquement et immédiatement exécuté lorsque la porte est fermée. Au contraire, la porte peut rester fermée mais déverrouillée, la réactivation du verrouillage pouvant être déclenchée par une instruction explicite de reverrouillage.

Le système de commande permet de sécuriser et de fiabiliser les opérations de déverrouillage et de reverrouillage consécutives à des demandes reçues, grâce aux vérifications de signaux de demandes et de la position de la porte. On évite ainsi notamment de déclencher des verrouillages ou déverrouillages imprudents ou intempestifs.

Dans des réalisations avantageuses, le système de commande est associé à de multiples espaces clos (donc de multiples portes), qui peuvent même être nombreux, comme par exemple des PM pour la fibre. Dans certains modes, le nombre d'espaces clos associés au système de commande est variable, de nouveaux espaces clos pouvant régulièrement être ajoutés, et certains pouvant éventuellement être retranchés.

La porte de l'espace clos offre un accès à celui-ci, qu'il s'agisse d'y exécuter une intervention (espace de travail tel que par exemple une armoire fibre de rue) ou d'y entrer (par exemple local de stockage).

Les fonctions du système de commande peuvent être procurées par un unique processeur dédié, un unique processeur partagé, ou une pluralité de processeurs individuels, dont certains peuvent être partagés. Qui plus est, l'usage du terme « processeur » ne doit pas être interprété comme se référant exclusivement à du matériel informatique capable d'exécuter des logiciels, et se réfère de manière générale à un dispositif de traitement, qui peut par exemple inclure un ordinateur, un processeur du type unité centrale de traitement ou CPU (pour « Central Processing Unit »), un circuit intégré, ou un dispositif logique programmable (PLD pour « Programmable Logic Device »). De plus, les instructions et/ou données permettant de mettre en oeuvre des fonctionnalités associées et/ou en résultant peuvent être stockées sur tout support lisible par un processeur, tel que par exemple un circuit intégré, un disque dur, un CD (pour « Compact Disc »), un disque optique tel que notamment un DVD (pour « Digital Versatile Disc »), une mémoire RAM (pour « Random-Access Memory ») ou ROM (pour « Read-Only Memory »). Des instructions peuvent notamment être stockées sous forme matérielle, logicielle, de micrologiciel (également appelé firmware), ou par une combinaison quelconque de ces derniers.

Dans des modes avantageux de réalisation, le système de commande est dissocié géographiquement de l'espace clos, et autorise une commande à distance des opérations de déverrouillage et de reverrouillage. Il peut par exemple être centralisé dans un environnement de gestion de multiples espaces clos, distribué en plusieurs unités de gestion reliées les unes aux autres, éventuellement sous forme mobile, reposer sur un ordinateur ou un ensemble regroupé d'ordinateurs connectés, ou sur des ressources distribuées sous forme d'informatique en nuage ou cloud. La dissociation géographique entre le système de commande et l'espace clos permet de s'appuyer sur une alimentation en énergie du système de commande indépendante de celle requise localement au niveau de l'espace clos. Ainsi, les opérations exécutées par le ou les processeurs n'empiètent pas sur les ressources disponibles dans l'espace clos.

Dans ce type de configurations, il est possible de se contenter au niveau de l'espace clos de l'énergie appropriée pour effectuer le déverrouillage et le reverrouillage de la porte, détecter si la porte est ouverte ou fermée, et communiquer avec le système de commande afin d'indiquer si la porte est ouverte ou fermée (on parle alors de liaison montante ou « uplink ») et de recevoir des instructions de déverrouillage et reverrouillage (on parle alors de liaison descendante ou « downlink »).

Dans certains modes, les demandes de déverrouillage et de reverrouillage transmises par une personne souhaitant accéder à l'espace clos ne sont pas adressées au niveau de ce dernier, mais directement au système de commande qui peut ainsi les traiter et prendre des décisions à leur sujet. Seules les instructions de déverrouillage et de reverrouillage sont alors communiquées à un dispositif au sein de l'espace clos ou à proximité.

De manière plus générale, le système de commande divulgué rend possible une délocalisation par rapport à l'emplacement de l'espace clos, des ressources énergétiques requises pour traiter efficacement les demandes de déverrouillage de porte. Ces traitements peuvent inclure par exemple l'authentification d'un technicien souhaitant intervenir dans l'espace clos, la vérification d'une plage horaire d'intervention programmée au regard de l'heure de la demande de déverrouillage, l'enregistrement des actions de déverrouillage, ouverture, fermeture et reverrouillage de porte, le stockage d'un rapport d'intervention correspondant, et/ou la communication de toutes informations utiles aux acteurs concernées, par exemple une société pour laquelle travaille le technicien, un OI ou un OC concerné par l'intervention. La dissociation temporelle entre la fermeture de porte et son reverrouillage et le déclenchement possible du reverrouillage par demande dédiée rendent d'autant plus attractives les potentialités d'économie d'énergie au niveau de l'espace clos. En effet, on est ainsi en mesure de réduire les sollicitations de déverrouillage, tant en termes d'opérations locales que de communications avec le système de commande. Par exemple, si un technicien doit fermer la porte quelques instants pour s'éloigner chercher du matériel, consulter un document ou passer un coup de fil, il peut s'abstenir de reverrouiller la porte. Il peut se contenter de ne procéder à une demande de reverrouillage qu'une fois son travail accompli et juste avant son départ.

Dans des réalisations particulières, le technicien ne peut finaliser un rapport d'intervention requis pour valider sa mission qu'une fois la demande de reverrouillage transmise. On peut ainsi se mettre à l'abri d'une négligence ou d'un oubli de fermeture ou de verrouillage.

Comme indiqué plus haut, toutes les économies d'énergie effectuées au niveau de l'espace clos peuvent être précieuses, car elles contribuent à augmenter l'autonomie des dispositifs et à réduire les nécessités de maintenance et de réalimentation - notamment par recharge ou changement de batteries. La réduction des opérations requises localement rend également possible une moindre usure des matériels, et par conséquent leur plus grande longévité. En présence d'un grand nombre d'espaces clos, par exemples de PM installés comme armoires de rue, les économies d'énergie, de gestion et de manutention peuvent s'avérer substantielles.

On remarquera que tout en offrant potentiellement de tels avantages, le système de commande préserve et facilite des possibilités de gestion centralisée et flexible, de sécurité, de suivi et/ou de contrôle.

Dans des variantes de réalisation, le système de commande est disposé dans l'espace clos ou à proximité, mais dispose d'une source d'énergie spécifique distincte de celle requise pour les opérations propres à l'espace clos. Par exemple, le système de commande est mobile et met en oeuvre une batterie autonome facilement rechargeable.

Dans certains modes, le(s) processeur(s) est (sont) configuré(s) pour générer une instruction de reverrouillage de la porte lorsque après transmission de l'instruction de déverrouillage et en l'absence de réception du signal de demande de reverrouillage, l'indicateur de position reçu reste à la position fermée pendant une durée dépassant un premier délai prédéfini, appelé délai d'action.

Ces modes de réalisation permettent de renforcer la sécurité des espaces clos, par exemple en cas d'oubli de verrouillage de porte après intervention, ou d'absence provisoire pendant une durée trop longue, ou si la demande de déverrouillage est effectuée à distance par une personne qui tarde à parvenir sur le lieu de l'espace clos pour ouvrir la porte.

Dans des réalisations particulières, le système de commande est configuré pour vérifier la présence au niveau de l'espace clos d'une personne transmettant la demande de déverrouillage. Par exemple, un code QR (pour « Quick Response ») affiché au niveau de l'espace clos doit être scanné par le demandeur, ou un numéro de série doit être entré au clavier de son téléphone mobile, ou la position du demandeur obtenue par un système de navigation doit coïncider avec celle de l'espace clos, ou une information d'identification d'espace clos doit être obtenue par le demandeur via une communication en champ proche ou NFC (pour « Near-Field Communication », telle que par exemple décrite dans les normes ISO/CEI 18092, ISO/CEI 14443-1 à 4, et NDEF - pour « NFC Data Exchange Format ») avec une carte à puce installée à proximité de la porte. Ces informations peuvent être communiquées par le demandeur au système de commande, qui est alors configuré pour les vérifier comme partie intégrante des conditions de validation de déverrouillage.

Cette disposition permet d'éviter que la porte de l'espace clos, bien que fermée, ne soit déverrouillée sans surveillance.

Dans certains modes avec reverrouillage automatique, le signal de demande de déverrouillage incluant au moins une information d'identification de l'espace clos parmi au moins deux espaces clos, le(s) processeur(s) est (sont) configuré(s) pour déterminer le délai d'action prédéfini en fonction de l'espace clos.

Ces modes accroissent la flexibilité du système, en permettant de tenir compte de la situation de l'espace clos pour décider du temps requis avant reverrouillage. Par exemple, certains PM peuvent être disposés à des endroits nécessitant des reverrouillages rapides, car particulièrement exposés à du vandalisme, tandis que d'autres peuvent requérir des durées plus longues que la moyenne avant reverrouillage, en raison du temps d'aller-retour nécessaire à un technicien pour se rendre à son véhicule et d'une occurrence élevée d'intempéries.

Une telle flexibilité rend possible la conjonction d'une sécurisation accrue et d'une réduction des opérations localement requises par l'équipement de l'espace clos, contribuant ainsi potentiellement à des réductions d'énergie et à la pérennité de cet équipement.

Selon des réalisations, le(s) processeur(s) est (sont) configuré(s) pour générer un signal d'alerte lorsque l'indicateur de position reçu passe de la position fermée à la position ouverte en absence de transmission de l'instruction de déverrouillage associée à la position fermée, et pour générer un signal d'alerte lorsque après transmission de l'instruction de déverrouillage et passage de l'indicateur de position reçu de la position fermée à la position ouverte, l'indicateur de position reste à la position ouverte pendant une durée dépassant un deuxième délai prédéfini, appelé délai d'intervention, et la (les) sortie(s) est (sont) adaptée(s) à transmettre ce signal d'alerte.

Des fonctionnalités traditionnelles d'alerte due à une ouverture non autorisée, susceptible de correspondre à une ouverture forcée en dépit du verrouillage, sont ainsi complétées par des avertissements en cas d'ouverture autorisée mais excessivement longue.

Selon des configurations avantageuses, la ou les entrée(s) est (sont) alors adaptée(s) à recevoir un signal de demande de prolongation d'ouverture de la porte, et le(s) processeur(s) est (sont) configuré(s) pour vérifier le signal de demande de prolongation reçu au regard de conditions de validation de prolongation et pour remplacer le délai d'intervention par un délai prolongé d'intervention supérieur au délai d'intervention lorsque les conditions de validation de prolongation sont remplies par le signal de demande de prolongation reçu.

La capacité pour le demandeur (par exemple un technicien en intervention) de prolonger le délai d'intervention en cas de besoin permet d'accroître la flexibilité du système, et de réduire ainsi la fréquence d'alertes inutiles. Cette disposition peut ainsi contribuer à réduire encore les dépenses locales d'énergie et l'usure de l'équipement de l'espace clos.

Selon d'autres configurations avec prise en compte du délai d'intervention, qui peuvent être combinées avec les précédentes, le signal de demande de déverrouillage incluant au moins une information d'identification de type d'intervention dans l'espace clos parmi au moins deux types d'intervention, le(s) processeur(s) est (sont) configuré(s) pour déterminer le délai d'intervention prédéfini en fonction du type d'intervention dans l'espace clos. La flexibilité du déclenchement d'une alerte peut ainsi être accrue, en prenant par exemple en compte la difficulté de l'intervention et le volume de manipulations (par exemple si de multiples branchements doivent être ajoutés dans un PM). De telles dispositions peuvent contribuer elles aussi aux avantages exposés plus haut, tout en maintenant un niveau de sécurité approprié.

Selon certaines réalisations, la ou les entrée(s), le(s) processeur(s) et la ou les sortie(s) sont adaptés pour communiquer à distance via au moins un premier réseau avec un dispositif de déverrouillage et de reverrouillage de la porte et avec un détecteur de la position de cette porte parmi la position ouverte et la position fermée, et pour communiquer à distance via au moins un deuxième réseau distinct du premier réseau avec au moins une source des signaux de demande de déverrouillage et de reverrouillage de la porte. L'utilisation de deux réseaux distincts rend possible une dissociation telle que décrite plus haut, tenant compte d'une part des capacités locales restreintes au niveau de l'espace clos, notamment en termes d'énergie, et d'autre part des capacités étendues pour la mise en oeuvre du système de commande. Notamment, selon des modes avantageux, le premier réseau est adapté à de bas débits de données et un faible niveau d'énergie, et le deuxième réseau à des débits élevés sans restriction particulière sur le niveau d'énergie.

En particulier, dans une configuration avantageuse, le(s) premier(s) réseau(x) inclut (incluent) un réseau étendu à basse consommation ou LPWAN. Un tel réseau est typiquement prévu pour des débits de l'ordre de 0,3 kbit/s à 50 kbit/s par canal, une portée pouvant atteindre quelques kilomètres en milieu urbain à 10 kilomètres en milieu rural, et des batteries petites et bon marché à longue durée de vie (pouvant fonctionner une vingtaine d'années).

Parmi les applications du descriptif, l'espace clos est une armoire de rue utilisée comme point de mutualisation d'un réseau de fibre optique.

Dans certaines réalisations, qui peuvent être combinées avec les précédentes, le signal de demande de déverrouillage de la porte incluant des éléments d'identification de l'espace clos et d'un technicien en charge d'une intervention dans cet espace clos, le(s) processeur(s) est (sont) configuré(s) pour procéder en utilisant les éléments d'identification à des vérifications d'identité du technicien et de validité de l'intervention dans l'espace clos.

Le descriptif concerne également un procédé de commande de déverrouillage d'une porte d'un espace clos mis en oeuvre par au moins un processeur et comprenant :
- une réception d'un signal de demande de déverrouillage de la porte, et d'un indicateur de position de cette porte parmi une position ouverte et une position fermée prévu pour au moins identifier des transitions entre la position ouverte et la position fermée,
- une vérification du signal de demande de déverrouillage reçu au regard de conditions de validation de déverrouillage et une génération d'une instruction de déverrouillage lorsque l'indicateur de position reçu indique la position fermée et les conditions de validation de déverrouillage sont remplies par le signal de demande de déverrouillage reçu,
- une transmission de l'instruction de déverrouillage de la porte.

Selon le descriptif, le procédé de commande comprend :
- une réception d'un signal de demande de reverrouillage de la porte temporellement dissociable d'un passage de l'indicateur de position de la position ouverte à la position fermée,
- une vérification du signal de demande de reverrouillage reçu au regard de conditions de validation de reverrouillage et une génération d'une instruction de reverrouillage lorsque l'indicateur de position reçu indique la position fermée et les conditions de validation de reverrouillage sont remplies par le signal de demande de reverrouillage reçu,
- une transmission de l'instruction de reverrouillage de la porte.

De plus, ce procédé de commande est avantageusement mis en oeuvre par un système de commande conforme à l'un quelconque des modes de réalisation ci-dessus du système de commande.

Le descriptif porte également sur un programme d'ordinateur comprenant un code adapté à mettre en oeuvre le procédé de commande selon l'un quelconque des modes ci-dessus lorsque ce programme est exécuté par un ordinateur.

Il est aussi relatif à un dispositif de stockage de programme non transitoire, lisible par un ordinateur, incorporant de manière tangible un programme d'instructions exécutables par l'ordinateur pour exécuter un procédé de commande conforme au descriptif.

Un tel dispositif de stockage de programme non transitoire peut consister, de manière non limitative, en un dispositif électronique, magnétique, optique, électromagnétique, infrarouge, semi-conducteur, ou en l'une quelconque de leurs combinaisons appropriées. A titre purement illustratif et non limitatif, pouvant être complété par une personne du métier, il peut s'agir d'une disquette pour ordinateur portable, d'un disque dur, d'une mémoire ROM, EPROM (pour « Erasable Programmable ROM »), d'une mémoire Flash, ou d'un CD-ROM portable (pour « Compact-Disc ROM »).

### Présentation des figures

L'invention sera mieux comprise et d'autres caractéristiques et avantages apparaîtront plus clairement à la lumière de la description ci-après d'exemples de réalisation, donnée à titre non limitatif en référence aux dessins annexés dans lesquels :
[Fig. 1] la figure 1 représente des interactions entre un espace clos, un système de commande de déverrouillage de porte de cet espace clos, conforme au descriptif, et un intervenant souhaitant accéder à l'espace clos ;
[Fig. 2] la figure 2 est un schéma de principe d'équipement d'un espace clos tel que celui représenté sur la figure 1 ;
[Fig. 3] la figure 3 développe sous forme de schéma bloc les fonctionnalités d'un système de commande tel que celui de la figure 1 ;
[Fig. 4A] la figure 4A présente une première partie d'un organigramme de mise en oeuvre d'un procédé de commande de déverrouillage mis en oeuvre par un système de commande tel que celui des figures 1 et 3, focalisé sur des opérations de déverrouillage et reverrouillage ;
[Fig. 4B] la figure 4B présente une seconde partie de l'organigramme de mise en oeuvre d'un procédé de commande de déverrouillage illustré à la figure 4A ;
[Fig. 5A] la figure 5A présente une première partie d'un organigramme de mise en oeuvre d'un procédé de commande de déverrouillage mis en oeuvre par un système de commande tel que celui des figures 1 et 3, focalisé sur la génération d'alertes ;
[Fig. 5B] la figure 5B présente une seconde partie de l'organigramme de mise en oeuvre d'un procédé de commande de déverrouillage illustré à la figure 5A ;
[Fig. 6] la figure 6 illustre un exemple d'interface utilisateur de suivi associé à un système de commande tel que celui des figures 1 et 3, dans des applications à des armoires fibre ;
[Fig. 7] la figure 7 montre schématiquement un appareil comprenant un système de commande tel que celui représenté sur les figures 1 et 3.

Sur les figures, des éléments identiques ou similaires sont désignés par les mêmes références.

### Description détaillée de modes de réalisation

La présente description illustre les principes exposés de telle sorte qu'une personne du métier est en mesure de concevoir diverses modalités qui, bien que non explicitement décrites ou montrées, incorporent les principes du descriptif et sont incluses dans son esprit et sa portée.

Tous les exemples et le langage conditionnel exposés ici ont des fins explicatives pour aider le lecteur à comprendre les principes du descriptif et les concepts développés par les inventeurs pour étendre l'état de l'art, et doivent être interprétés comme n'étant pas restreints à de tels exemples et conditions spécifiquement décrits.

De plus, toutes les mentions récitant des principes, aspects et modes de réalisation du descriptif, aussi bien que des exemples spécifiques correspondants, ont vocation à en couvrir à la fois des équivalents structurels et fonctionnels. De tels équivalents ont également vocation à inclure à la fois des équivalents connus et des équivalents qui seront développés dans l'avenir, à savoir tous éléments développés qui remplissent la même fonction, indépendamment de leur structure.

Ainsi, par exemple, une personne du métier appréciera que les schémas blocs présentés ici fournissent des vues conceptuelles incorporant les principes du descriptif. De façon similaire, il sera apprécié que tous les organigrammes et diagrammes de flux représentent divers procédés qui peuvent être substantiellement représentés dans des supports lisibles par ordinateur et exécutés en conséquence par un ordinateur ou un processeur, qu'un tel ordinateur ou processeur soit explicitement montré ou non.

Les termes « adapté pour » et « configuré pour » sont utilisés dans le présent descriptif comme couvrant de manière large une configuration initiale, une adaptation ultérieure, un complément, ou toute combinaison de ces derniers, que cela soit effectué par des moyens matériels, logiciels ou micrologiciels (également appelés firmware).

Les fonctions des divers éléments montrés sur les figures peuvent être procurées à travers l'utilisation de matériel informatique (hardware) dédié, comme de matériel informatique capable d'exécuter un ou des logiciels (software) en association avec un ou des logiciels appropriés.

Ces éléments sont avantageusement mis en oeuvre par une combinaison de matériel informatique et de logiciel(s) dans un ou plusieurs dispositifs à usage général programmé(s) de façon appropriée, qui peuvent inclure un processeur, une mémoire et des interfaces d'entrée/sortie.

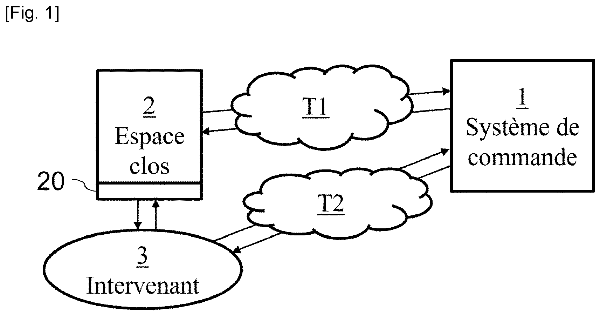

Un ensemble impliquant un système de commande 1 conforme au descriptif, tel qu'illustré sur la **figure 1**, a pour objet de sécuriser l'accès à un espace clos 2 muni d'une porte 20. Le terme « porte » désigne un ou plusieurs éléments permettant d'accéder à l'intérieur de l'espace clos 2 quand elle est ouverte, que ce soit pour y entrer ou pour y effectuer des opérations, et permettant d'en empêcher l'accès quand elle est fermée. En plus d'être fermée, la porte 20 peut être « verrouillée », ce terme visant ici un dispositif de sécurisation en empêchant l'ouverture, la porte devant être « déverrouillée » pour pouvoir être ouverte. Le verrouillage et le déverrouillage de porte peuvent notamment reposer sur la combinaison d'une sécurisation mécanique (par exemple verrou et gâchette, pêne et gâche, barre, loquet) et électronique, électromagnétique ou optique, comme connu d'une personne du métier.

Une personne 3, telle que notamment un intervenant chargé d'accomplir une prestation dans l'espace clos 2 (par exemple une armoire fibre de rue), doit ainsi pour accéder à ce dernier obtenir le déverrouillage de la porte 20 avant de pouvoir l'ouvrir. Par sécurité et pour éviter des intrusions ou des actes de vandalisme, il est également souhaitable que la porte 20 soit ensuite reverrouillée après intervention. Le descriptif n'est pas limité à des interventions de techniciens, et inclut par exemple l'accès d'une entreprise à du matériel de valeur, d'un groupe de personnes à une salle de réunion, d'un chercheur à du matériel sensible ou d'un visiteur à des oeuvres précieuses. Dans des variantes, la personne 3 ne doit pas elle-même accéder à l'intérieur de l'espace clos 2, mais doit permettre à une autre personne d'y accéder. Par exemple, il s'agit du dirigeant d'une société de travaux ou de dépannage devant rendre l'accès possible à un de ses employés, ou de l'organisateur d'une réunion devant permettre à un groupe de se rendre dans une salle dédiée.

Le système de commande 1 est prévu pour pouvoir effectuer un déverrouillage et un reverrouillage de la porte 20. Dans des modes avantageux, ces opérations sont effectuées à distance via un premier réseau de télécommunications T1. La personne ou l'intervenant 3 (désigné ci-après comme l'intervenant par commodité) est quant à lui en mesure d'échanger avec le système de commande 1 à travers un deuxième réseau de télécommunications T2, de façon en particulier à pouvoir solliciter un déverrouillage de la porte 20. Dans des réalisations avantageuses, les réseaux T1 et T2 sont distincts, ce qui permet de bénéficier d'avantages spécifiques aux fonctionnalités impliquées dans les opérations entre le système de commande 1 d'une part, et l'espace clos 2 ou l'intervenant 3 d'autre part. Dans des variantes, il s'agit d'un même réseau, ou les deux réseaux T1 et T2 ont des parties communes.

Ces réseaux T1 et T2 peuvent notamment inclure ou consister en un réseau cellulaire tel que par exemple ceux connus comme UMTS (pour « Universal Mobile Télécommunications System »), LTE (pour « Long Term Evolution ») ou 5G, standardisés par la coopération 3GPP (pour « 3rd Génération Partnership Project »), un réseau câblé, un réseau de radiofréquences pouvant comprendre un réseau sans fil tel que par exemple ceux commercialisés sous la marque WiFi (pour « Wireless Fidelity », régis par les normes IEEE 802.11), un réseau satellite et/ou un réseau filaire.

Dans des réalisations avantageuses, le réseau T1 inclut un réseau LPWAN. Celui-ci s'avère particulièrement adapté à une préservation accrue des ressources en énergie disponibles localement au niveau de l'espace clos 2, à une économie sur les matériels de communication associés, et à un débit de données réduit tout en étant potentiellement suffisant pour les vérifications requises auprès de l'espace clos 2 et pour les instructions de verrouillage et de déverrouillage de porte. Le réseau LPWAN du réseau T1 peut notamment être obtenu par communication radio sur bande ISM (pour « Industriel, Scientifique et Médical », définie en particulier dans l'Union Européenne par la norme EN 55011), et dont des versions incluent par exemple les réseaux commercialisés sous le nom « LoRa^{®} » ou par la société Sigfox. Dans d'autres réalisations avec LPWAN, le réseau T1 utilise des bandes de fréquences licenciées, et peut par exemple s'appuyer sur l'une des technologies NB-IoT (pour « Narrow Band - Internet of Things ») ou LTE-M (pour « LTE - Machine type communication ») standardisées par 3GPP.

Le réseau T2 comprend quant à lui avantageusement un réseau à débit élevé et aisément accessible en mobilité, tel que par exemple un réseau de téléphonie mobile.

Dans des variantes, le système de commande 1 est disposé à proximité de l'espace clos 2 et/ou de l'intervenant 3, l'un ou l'autre des réseaux T1 et T2, ou les deux, pouvant être réduit à des connexion à courte distance. Ces modes sont susceptibles d'être attractifs dans certaines situations, par exemple en cas de contrôle de sécurité centralisé au voisinage de l'espace clos 2 (proximité de ce dernier et du système de commande 1), ou d'ouverture et fermeture de porte par une autre personne que l'intervenant 3 en concertation avec celui-ci.

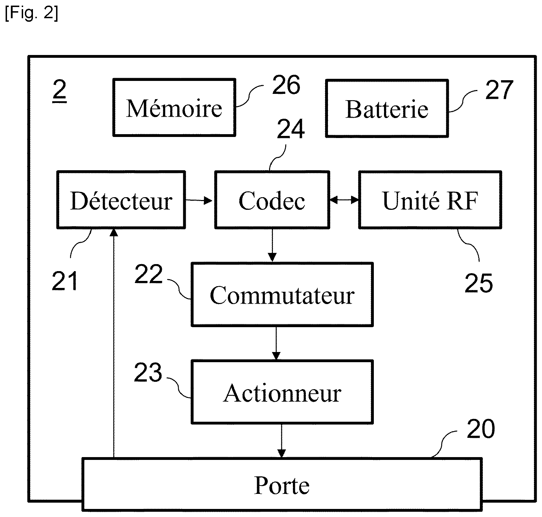

L'espace clos 2, tel que représenté sur la **figure 2****,** est équipé d'un dispositif de verrouillage et de déverrouillage de la porte 20, qui peut par exemple dans le cas d'un verrouillage électromécanique comprendre un commutateur électronique 22 et un actionneur mécanique 23. Le commutateur 22 est apte à déclencher une position verrouillée et une position déverrouillée, et peut notamment être du type SPDT (pour « Single Pole, Double Throw »). L'espace clos 2 contient également un détecteur 21, apte à identifier la position ouverte ou close de la porte 20. Il peut s'agir par exemple d'un capteur infrarouge ou magnétique, d'un micro-accéléromètre ou de tout autre type de détecteur connu d'une personne du métier.

Dans des variantes de réalisation, le commutateur 22 et l'actionneur 23 sont aptes à déclencher non seulement le déverrouillage et le verrouillage de la porte 20, mais également son ouverture et éventuellement sa fermeture. Le commutateur 22 peut par exemple être du type SPTT, c.o. (pour Single Pole, Triple Throw, Centre Off), avec deux directions de contact respectivement associées au déverrouillage et à l'ouverture de porte, et une position intermédiaire sans contact associée au verrouillage. Dans des réalisations particulières de ces variantes, le commutateur 22 est lui-même utilisé pour identifier et communiquer les indications sur la position ouverte ou fermée de la porte 20, et fait ainsi office également de détecteur 21.

Des moyens de communication via le réseau T1 incluent un codec 24 permettant de coder et décoder les messages selon le protocole de communication utilisé, et une unité 25 de transmission et de réception de signaux transitant par le réseau T1, qui peut notamment inclure un modem, ainsi qu'une antenne dans les cas de transmission radio (comme mentionné à titre illustratif avec RF pour « RadioFréquences »), cellulaire, sans fil ou satellite. Ces moyens de communications sont couplés avec le détecteur 21, de façon à pouvoir informer le système de commande 1 de la position ouverte ou fermée de la porte 20, et avec le commutateur 22, de façon à ce que le système de commande 1 puisse déclencher le déverrouillage ou le reverrouillage de la porte 20. Dans certaines réalisations, les informations sur la position de la porte 20 ne sont transmises qu'en cas de passage d'une position à une autre, ce qui permet de réduire les dépenses d'énergie et l'usure du matériel. Dans d'autres réalisations, elles sont transmises périodiquement, ce qui permet de renforcer la surveillance des locaux même en cas de dysfonctionnements provisoires ou de problèmes réseaux. L'espace clos 2 est également muni d'au moins une mémoire 26, apte à stocker les informations utiles notamment pour la mise en oeuvre des opérations de télécommunications et la reconnaissance d'identité de l'espace clos 2. Il peut s'agir par exemple d'une mémoire morte programmable ou PROM (pour « Programmable ROM »).

Une source d'énergie, telle qu'une ou plusieurs batteries 27 remplaçables ou rechargeables, permet d'assurer le fonctionnement des éléments actifs, tels que le détecteur 21, le commutateur 22, le codec 24 et l'unité 25. Il s'agit avantageusement de batteries longue durée, pouvant avoir par exemple une longévité de dix ou vingt ans au regard des usages requis dans l'espace clos 2. Elles consistent par exemple en des batteries au lithium de quelques volts. Dans des variantes, la source d'énergie est fournie par un réseau d'énergie, par exemple via une connexion électrique.

Dans des réalisations avantageuses, le système de commande 1 est prévu pour interagir avec de multiples espaces clos 2 identiques ou similaires à celui décrit. Cela rend possible une gestion centralisée et sécurisée des espaces clos, notamment dans le cadre d'opérations de maintenance ou d'installation, telles que celles requises par exemple pour la fibre optique avec les armoires fibre.

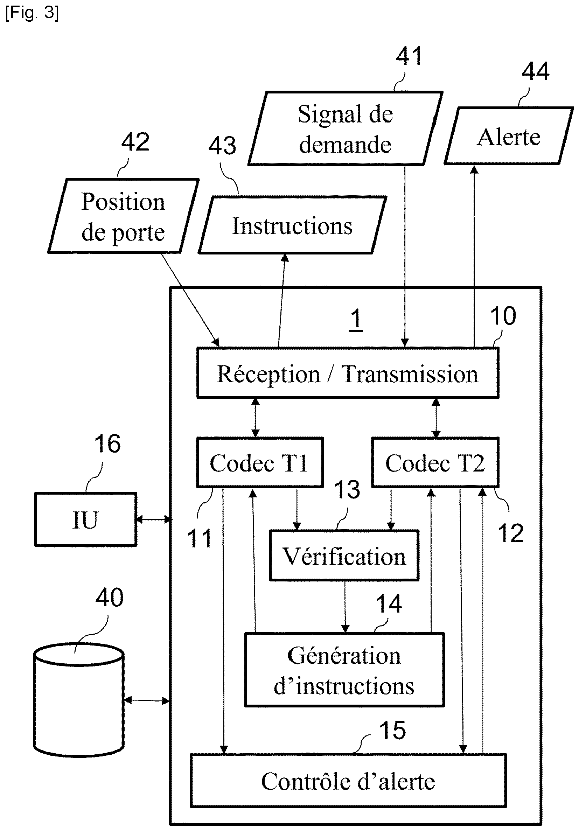

Le système de commande 1, tel que représenté sur la **figure 3****,** est avantageusement un appareil, ou une partie physique d'un appareil, conçu, configuré et/ou adapté pour réaliser les fonctions mentionnées et pour produire les effets ou résultats mentionnés. Dans des réalisations alternatives, le système de commande 1 est incorporé dans un ensemble d'appareils ou de parties physiques d'appareil(s), que ces derniers soient regroupés dans une même machine ou dans des machines distinctes, pouvant être éloignées. Il peut notamment s'agir de fonctionnalités réparties dans un système informatique en nuage.

Le système 1 est adapté à recevoir toutes données utiles en provenance d'une ou plusieurs bases de données locales ou éloignées 40. Ces dernières peuvent prendre la forme de ressources de stockage disponible par toute sorte de moyens de stockage appropriés, qui peuvent comporter notamment une mémoire RAM, ou une mémoire EEPROM (de l'anglais Electrically-Erasable Programmable Read-Only Memory) telle qu'une mémoire Flash, qui peut être incluse dans un disque SSD (de l'anglais Solid-State Drive). Dans certaines réalisations, les informations des bases de données 40 peuvent être obtenus en diffusion continue à partir de sources externes. Le système 1 peut être également prévu pour fournir des informations aux bases de données 40 pour enregistrement.

Le système 1 est associé à une ou plusieurs interface(s) utilisateur 16 (IU), qui permettent à un utilisateur d'entrer ou d'obtenir des informations ou de donner des instructions. Par interface utilisateur, on entend ici comme par la suite tout moyen approprié pour entrer ou récupérer des données, informations et/ou instructions, notamment toutes capacités visuelles, tactiles et/ou auditives, qui peuvent inclure notamment un écran, un clavier, une boule de commande ou trackball, un pavé tactile, un écran tactile, un haut-parleur et/ou un système de reconnaissance vocale.

Le système 1 est apte à recevoir en provenance de l'espace clos 2 via le réseau T1 un indicateur de position de porte 42 ouverte ou fermée (ou éventuellement inconnue en cas de dysfonctionnement), et à transmettre à cet espace clos 2 des instructions 43, qui peuvent être des instructions de déverrouillage ou de reverrouillage. Le système 1 est également apte à recevoir en provenance de l'intervenant 3 via le réseau T2 des signaux de demande 41, qui peuvent être relatives à des demandes de déverrouillage, de reverrouillage ou de prolongation de délai prévu en cas de porte ouverte avant de déclencher une alerte, et à transmettre des signaux d'alerte 44 en cas de problèmes tels qu'une porte ouverte sans autorisation ou laissée ouverte trop longtemps. Les alertes ont vocation à être diffusées à toutes personnes potentiellement concernées, par exemple un responsable d'une société chargée d'une intervention ou un service de police. Par conséquent, en fonction des modes de réalisations, elles peuvent ou non être transmises via le réseau T2.

Dans ce qui suit, les modules doivent être compris comme des entités fonctionnelles plutôt que des composants matériels, physiquement distincts. Ces modules peuvent par conséquent être incorporés soit de manière groupée dans un même composant tangible et concret, soit répartis dans divers tels composants. Par ailleurs, chacun de ces modules peut lui-même être partagé entre au moins deux composant physiques. De plus, les modules sont réalisés sous forme matérielle, logicielle, de firmware, ou de toute forme mixte de ces derniers. Ils sont de préférence incorporés dans au moins un processeur du système 1.

Le système 1 inclut ainsi un module 10 de réception et transmission de signaux via au moins les réseaux T1 et T2. Ce module 10 peut notamment comprendre des entrées/sorties de cartes électroniques. Dans certaines réalisations, il comprend au moins un modem prévu pour les communications via les réseaux T1 et T2, et dans le cas où ces derniers ne sont pas du même type, au moins deux modems respectivement associés aux réseaux T1 et T2. Dans des variantes, les modems sont externes au système 1.

Le système 1 inclut également au moins un codec prévu pour les réseaux T1 et T2, tel que les codecs 11 et 12 illustrés dans le cas où les protocoles des réseaux T1 et T2 sont distincts.

Un module de vérification 13 a pour fonction de valider ou non les demandes relatives à l'espace clos 2 reçues en provenance de l'intervenant 3, en tenant compte le cas échéant des indications sur la position de la porte 20 associée. Ces vérifications peuvent notamment porter sur une authentification d'identité de l'intervenant 3, par exemple via les informations communiquées dans son signal de demande 41, celles récupérées dans ce signal 41 telles que son numéro de téléphone, ou celles liées à la diffusion du signal 41 telles que l'heure de transmission ou de réception. Elles peuvent comprendre une mise en cohérence d'une demande de déverrouillage avec une planification d'intervention ou de présence dans l'espace clos 2, tant en termes de société ou de personne que de plage horaire.

Dans certaines réalisations, le module de vérification 13 requiert une identification de l'espace clos 2. Par exemple, l'intervenant 3 doit scanner un code QR ou indiquer dans son message un code alphanumérique, disponible au niveau de l'espace clos 2, ou utiliser son téléphone mobile ou une tablette pour récupérer un identifiant par échange selon la technologie NFC avec une carte à puce intégrée à la porte 20 ou à proximité - on peut ainsi se passer d'alimenter en énergie le dispositif NFC de l'espace clos 2 puisque l'énergie requise provient du téléphone mobile ou de la tablette.

Un module 14 de génération d'instructions couplé au module 13 de vérification est prévu pour générer les instructions 43 destinées à l'espace clos 2, en particulier en relation avec les demandes reçues de l'intervenant 3 lorsque leur réalisation est autorisée.

De manière optionnelle et avantageuse, le système 1 dispose également d'un module de contrôle d'alerte 15, destiné à produire des alertes conduisant à la diffusion des signaux 44 en cas d'anomalies. Le module 15 est apte à tenir compte de la position de la porte 20.

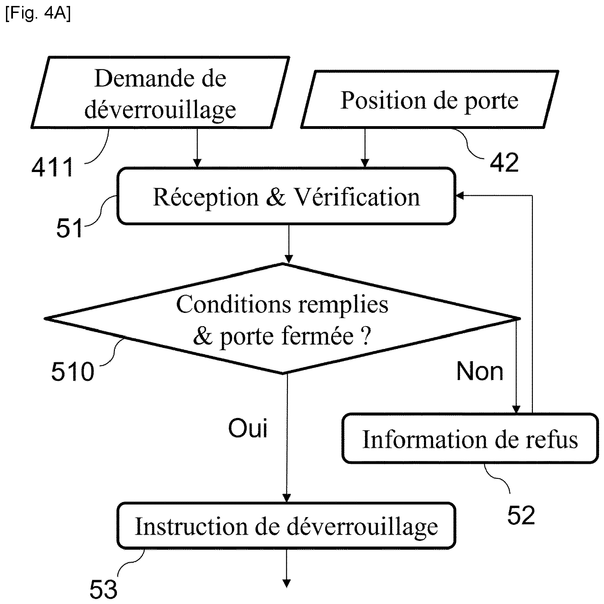

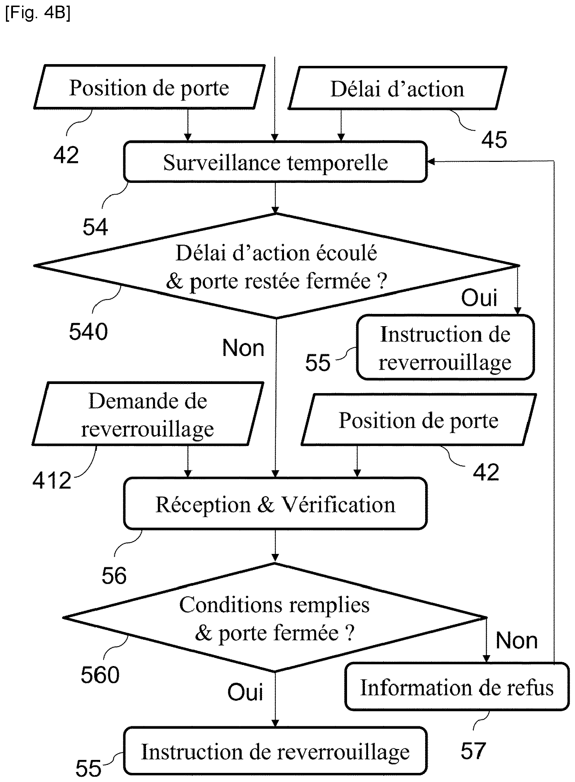

Des mises en oeuvre possibles du système de commande 1 sont explicitées ci-après, et permettront de mieux cerner les potentialités des modules décrits. Une mise en oeuvre liée aux opérations de déverrouillage et reverrouillage comprend ainsi les étapes suivantes, illustrées sur la **figure 4A** et la **figure 4B** :
- dans une étape initiale 51 déclenchée par l'intervenant 3, réception par le module 10 via le réseau T2, décodage par le module 12 et vérification par le module 13 d'un signal de demande de déverrouillage 411 de la porte 20 de l'espace clos 2, en considération de l'indicateur 42 de position de porte reçu de l'espace clos 2 ; cette demande n'est validée que si les conditions requises sont remplies, et notamment après s'être assuré que la porte est en position fermée afin d'éviter de répondre à des sollicitations intempestives ou inappropriées ;
- si la demande de déverrouillage n'est pas validée (étape 510) suite à la vérification fondée sur le signal de demande 411 ou l'absence de constat de porte fermée, rejet de la demande et avantageusement, génération et envoi (étape 52) d'un message d'information concernant le refus de déverrouillage ; dans certaines réalisations, le contenu de ce message et le ou les destinataires dépendent de la cause du rejet, par exemple pour indiquer à l'intervenant 3 que la porte 20 semble déjà ouverte ou que l'identification de l'espace clos 2 n'est pas correcte, ou prévenir le dirigeant d'une société d'installation ou de dépannage que l'identité du technicien ou l'horaire d'intervention ne correspond pas à ce qui était prévu, de façon à pouvoir y remédier ou clarifier la situation ; si les problèmes sont résolus, l'étape 51 de réception et vérification est ainsi susceptible d'être réitérée avec succès ;

- si la demande de déverrouillage est validée (étape 510) après vérification fondée sur le signal de demande 411 et le constat de porte fermée, génération et envoi vers l'espace clos 2 via le réseau T1 (étape 53) d'une instruction 43 de déverrouillage de la porte 20 ;
- selon des réalisations optionnelles du système 1, une fois l'instruction 43 de déverrouillage transmise, surveillance (étape 54) du temps écoulé après cette transmission par rapport à un délai d'action 45 au regard de l'indicateur 42 de position, pour savoir si la porte 20 une fois déverrouillée est ouverte sans trop tarder, par exemple dans un délai de 5 minutes ; cette même opération est avantageusement effectuée aussi après ouverture puis fermeture ultérieure de la porte 20 (par exemple après intervention d'un technicien, rangement de documents ou récupération de matériel), le suivi temporel étant alors effectué à compter du moment de fermeture identifié par l'indicateur de position 42 ; selon certains modes, le délai d'action 45 est adapté automatiquement en fonction de spécificités de l'espace clos 2, de l'intervenant 3 et/ou des actions à effectuer dans l'espace clos 2 ;
- si au bout du délai d'action 45, l'indicateur de position 42 montre que la porte 20 reste close sans demande expresse de reverrouillage (étape 540), génération et transmission à l'espace clos 2 via le réseau T1 d'une instruction 43 de reverrouillage (étape 55), qui permet d'éviter une intrusion en sécurisant le lieu ;
- tant que le délai d'action 45 n'est pas encore écoulé et que l'indicateur de position 42 montre que la porte 20 reste close (étape 540), réception possible en provenance de l'intervenant 3 via le réseau T2, décodage par le module 12 et vérification par le module 13 d'un signal de demande de reverrouillage 412 de la porte 20 (étape 56) ;
- si la demande de reverrouillage n'est pas validée (étape 560) sur la base du signal de demande 412 ou de l'indicateur 42 (porte non

fermée), rejet de la demande et avantageusement, génération et envoi (étape 57) d'un message d'information concernant le refus de reverrouillage ; dans certaines réalisations, le contenu de ce message et le ou les destinataires dépendent de la cause du rejet, par exemple pour indiquer à l'intervenant 3 que la porte 20 semble mal fermée ou que l'identification de l'espace clos 2 n'est pas correcte, ou prévenir le dirigeant d'une société d'installation ou de dépannage que l'identité du technicien ne coïncide pas avec celle du technicien ayant précédemment requis le déverrouillage, de façon à pouvoir y remédier ou clarifier la situation ; si les problèmes sont résolus, l'étape 56 de réception et vérification est ainsi susceptible d'être réitérée avec succès, et en attendant, la surveillance temporelle de l'étape 54 au regard du délai d'action 45 peut se poursuivre si elle est mise en oeuvre ;
- si la demande de reverrouillage est validée (étape 560) après vérification fondée sur le signal de demande 412 et le constat de porte fermée, génération et envoi vers l'espace clos 2 via le réseau T1 (étape 55) d'une instruction 43 de reverrouillage de la porte 20.

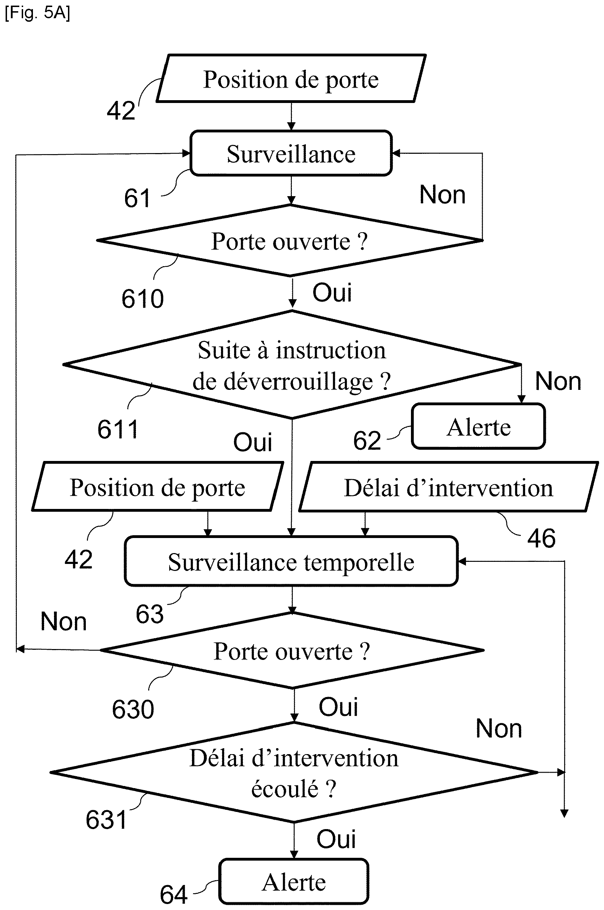

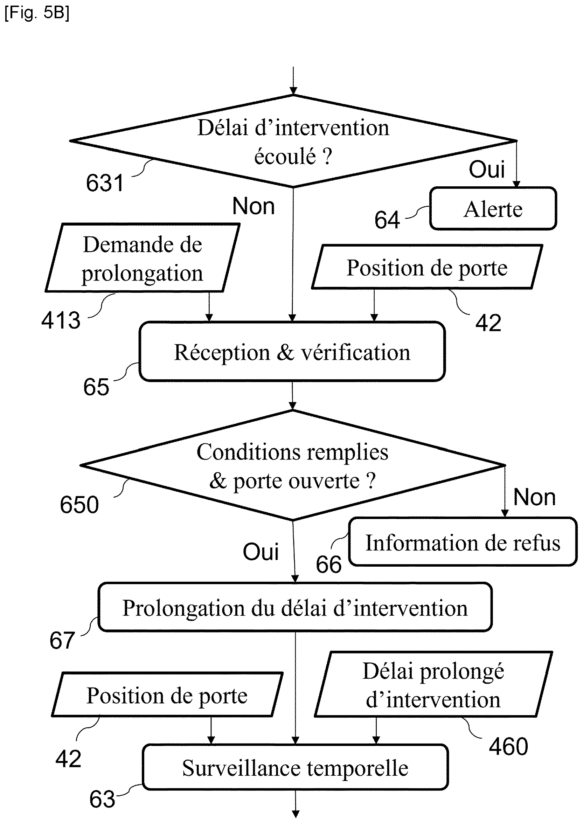

Une mise en oeuvre liée aux opérations d'alerte, mises en oeuvre dans des réalisations avantageuses du système 1, comprend par ailleurs les étapes suivantes, illustrées sur la **figure 5A** et la **figure 5B** **:**
- surveillance (étape 61) de l'indicateur 42 de position de porte, pour savoir si elle a été ouverte ;
- en cas d'ouverture (étape 610), vérification si elle fait suite à la réception d'une instruction 43 de déverrouillage (étape 611) ;
- si l'ouverture de la porte 20 sans instruction préalable de déverrouillage est constatée, génération et diffusion (étape 62) aux personnes pertinentes d'un message d'alerte ;
- si l'ouverture de la porte 20 fait suite à la transmission d'une instruction 43 de déverrouillage, surveillance temporelle (étape 63) du temps écoulé en position ouverte à compter de l'ouverture de porte, au regard d'un délai 46 appelé délai d'intervention ; le terme « intervention » est utilisé ici de manière générique bien que l'ouverture puisse s'appliquer à d'autres actions, comme mentionné plus haut ; le délai d'intervention 46 correspond à une
évaluation de la durée requise pour les actions à mener dans l'espace clos 2, par exemple 45 minutes pour qu'un technicien puisse procéder à une intervention dans une armoire fibre de rue ; selon certains modes, le délai d'intervention 46 est adapté automatiquement en fonction de spécificités de l'espace clos 2, de l'intervenant 3 et/ou des actions à effectuer dans l'espace clos 2 ;
- si l'indicateur 42 de position permet d'observer une fermeture de la porte 20 (étape 630), reprise de l'étape de surveillance 61, sinon poursuite de la surveillance temporelle tant que le délai d'intervention 46 n'est pas écoulé (étape 631) ;
- si l'indicateur 42 de position permet de constater que la porte 20 est restée ouverte (étape 630) alors que le délai d'intervention 46 est écoulé (étape 631), génération et diffusion aux personnes pertinentes d'un message d'alerte (étape 64) ;
- tant que le délai d'intervention 46 n'est pas encore écoulé et que l'indicateur de position 42 montre que la porte 20 reste ouverte (étapes 630 et 631), réception possible en provenance de l'intervenant 3 via le réseau T2, décodage par le module 12 et vérification par le module 13 d'un signal de demande de prolongation 413 du délai d'intervention 46 (étape 65) ; en fonction des modes de réalisation, la prolongation peut correspondre à une durée prédéterminée ou dépendre du contenu de la demande de prolongation, de l'espace clos 2 et/ou du type d'actions qui y sont menées ;
- si la demande de prolongation n'est pas validée (étape 650) après vérification fondée sur le signal de demande 413 ou constat de porte non ouverte d'après l'indicateur 42 de position, rejet de la demande et avantageusement, génération et envoi (étape 66) d'un message d'information concernant le refus de prolongation ; dans certaines réalisations, le contenu de ce message et le ou les destinataires dépendent de la cause du rejet, par exemple pour indiquer à l'intervenant 3 que la porte 20 doit être rouverte ou que l'identification de l'espace clos 2 n'est pas correcte, ou prévenir le dirigeant d'une société d'installation ou de dépannage que l'identité du technicien ne coïncide pas avec celle du
technicien ayant précédemment requis le déverrouillage, de façon à pouvoir y remédier ou clarifier la situation ; si les problèmes sont résolus, l'étape 65 de réception et vérification est ainsi susceptible d'être réitérée avec succès, et en attendant, la surveillance temporelle de l'étape 63 au regard du délai d'intervention 46 peut se poursuivre ;
- si la demande de prolongation est validée (étape 650) après vérification fondée sur le signal de demande 413 et le constat de porte ouverte, prolongation du délai d'intervention 46 en un délai d'intervention prolongé 460 (étape 67) ; la surveillance temporelle de l'étape 63 peut alors se poursuivre de façon similaire à ce qui a été décrit plus haut.

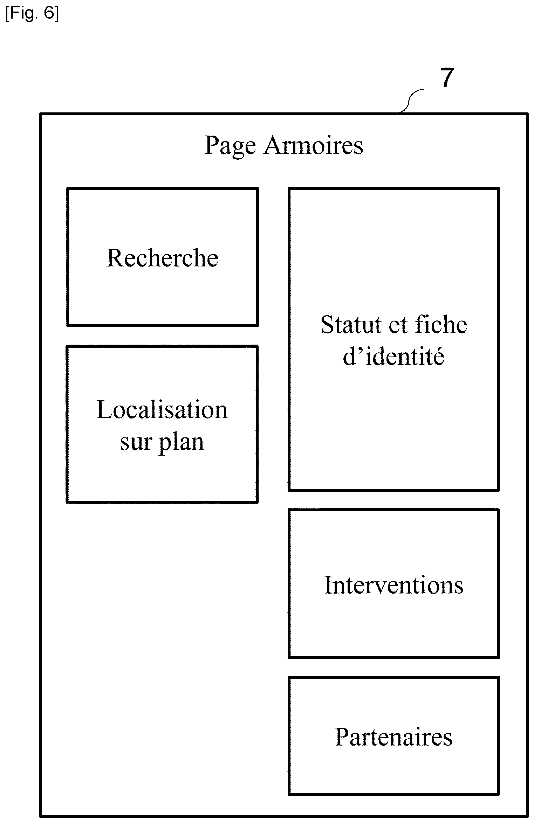

L'application du système de commande 1 à des interventions de techniciens sur des armoires fibre de rue est illustrée par une interface utilisateur représentée sur la **figure 6****,** exploitée dans une plateforme de gestion. Cette interface permet aux personnes habilitées d'accéder à diverses informations relatives aux installations de fibre optique et aux armoires fibre associées, ainsi que de les enregistrer et les modifier, en fonction des niveaux d'autorisation dont elles disposent. La plateforme peut ainsi donner accès à de multiples informations relatives aux acteurs impliqués, qui incluent les opérateurs (OI et OC), les sociétés partenaires en charge des interventions et les techniciens opérant pour leur compte (salariés ou non), aux armoires fibre, aux interventions sur ces armoires, et aux multiples liens et interactions entre ces diverses données.

Par exemple, une page 7 dédiée aux armoires comprend plusieurs cartes d'affichage pouvant être étendues ou réduites. L'une d'entre elles permet d'effectuer des recherches appliquées à des armoire de rue (par opérateur OC ou OI, emplacement, société impliquée dans les interventions, dernières dates d'interventions, numéro d'identification, critère d'alerte, etc.). Lorsqu'une armoire est sélectionnée, la page 7 donne accès à sa localisation sur un plan, ainsi qu'à sa fiche d'identité (nom, type, adresse, OI et OC correspondants, date de mise en service, etc.) et à son statut (dernière intervention effectuée, prochaine intervention programmée, éventuellement message d'alerte relatif à une ouverture non autorisée ou trop longue, etc.). La page 7 permet également d'obtenir pour cette armoire sélectionnée deux autres cartes d'informations respectivement dédiées aux interventions passées, présentes ou à venir (OI, partenaire et technicien impliqués, dates et heures d'ouverture et de fermeture pour les interventions passées, statut « réalisée », « annulée », « à venir », « en cours », « ouverture non autorisée », etc.), et aux sociétés partenaires concernées (pour chacune : OI associé, nom, coordonnées, informations de contacts, etc.).

Une page dédiée aux interventions est disponible de manière similaire, et permet d'obtenir pour chaque intervention sélectionnée des données de même nature que celles indiquées ci-dessus ou des informations complémentaires, telles que par exemple l'historique des messages échangés par messagerie téléphonique du type SMS (pour « Short Message Service ») ou par courriels, en termes de métadonnées d'adressage et de contenus. En fonctionnement, la plateforme permet notamment l'envoi de messages automatiques à des techniciens, à leur manager et à leur société, en leur communiquant des informations d'identification de tâches, d'armoire et de planning concernant les prochaines interventions (y compris d'éventuelles annulations ou changements de date ou d'horaire). Elle permet également de recueillir automatiquement leurs messages d'informations ou de sollicitations.

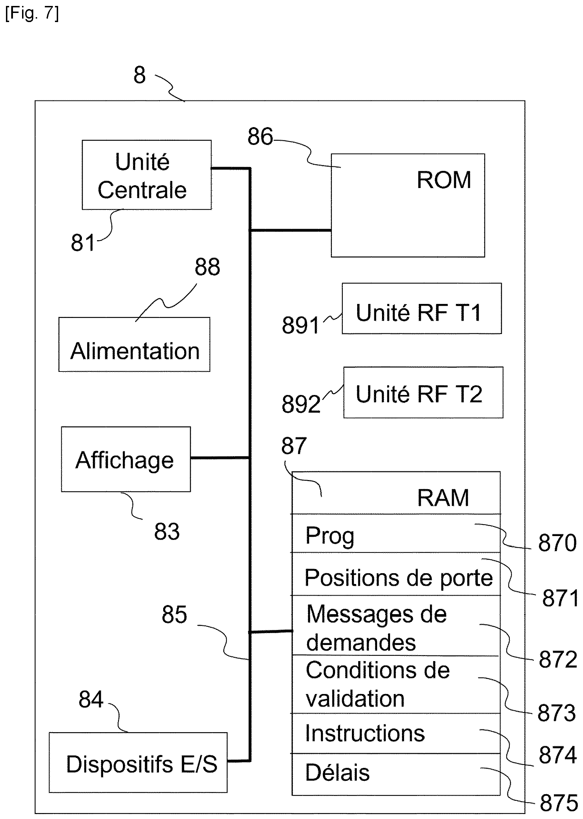

Un appareil 8 particulier, représenté sur la **figure 7****,** incorpore le système de commande 1. Il correspond par exemple à un ordinateur d'entreprise, un ordinateur personnel, une tablette ou un téléphone mobile.

L'appareil 8 comprend les éléments suivants, connectés les uns aux autres par un bus 85 d'adresses et de données qui transporte également un signal d'horloge :
- un microprocesseur 81 (ou CPU) ;
- une mémoire non volatile 86 du type ROM ;
- une RAM 87 ;
- un ou plusieurs dispositifs d'entrée/sortie (E/S) 84, tels que par exemple un clavier, une souris, une manette de jeu ou joystick, une
webcam ; d'autres modes d'introduction de commandes telles que par exemple par reconnaissance vocale sont également possibles ;
- une source d'alimentation 88 - dans une variante, cette source est externe à l'appareil 8 ;
- deux unités de radiofréquences 891 et 892 appropriées respectivement à des télécommunications via les réseaux T1 et T2.

L'appareil 8 comprend aussi un dispositif d'affichage 83 du type écran d'affichage, qui peut dans certaines variantes être externe à l'appareil 8 et connecté à ce dernier par un câble ou sans fil pour la transmission des signaux d'affichage.

Le mot « registre » utilisé ci-dessous dans la description de la mémoire 87 peut désigner une zone mémoire de faible capacité (quelques données binaires) aussi bien qu'une zone mémoire de grande capacité (permettant le stockage d'un programme entier, ou de tout ou partie des données représentatives de données calculées ou à afficher). Les registres peuvent par ailleurs être disposés et constitués de n'importe quelle manière, chacun d'eux ne correspondant pas nécessairement à des emplacements mémoires adjacents mais ces derniers pouvant être répartis autrement, ce qui couvre notamment la situation dans laquelle un registre inclut plusieurs registres de plus petites tailles.

La RAM 87 comprend notamment :
- dans un registre 870, le système d'exploitation du microprocesseur 81 et les algorithmes mettant en oeuvre les étapes de la méthode spécifique au présent descriptif et exposées ci-dessus ;
- dans un registre 871, des informations représentatives des positions de porte (indicateur 42) ;
- dans un registre 872, des informations représentatives des signaux de demandes (signaux 41) ;
- dans un registre 873, des informations représentatives des conditions de validation ;
- dans un registre 874, des informations représentatives des instructions (signaux 43) ;
- dans un registre 875, des informations représentatives des délais (délais 45, 46, 460).

Lorsqu'il est mis en route, le microprocesseur 81 charge et exécute les instructions du programme contenu dans la RAM 87, en utilisant les registres 871 à 875 pour les paramètres.

## Revendications

1. Système de commande (1 ; 8) de déverrouillage d'une porte (20) d'un espace clos (2) comprenant :
- au moins une entrée (10) adaptée à recevoir un signal de demande de déverrouillage (41, 411) de ladite porte, et un indicateur de position (42) de la ladite porte parmi une position ouverte et une position fermée prévu pour au moins identifier des transitions entre ladite position ouverte et ladite position fermée,
- au moins un processeur (81) configuré pour vérifier ledit signal de demande de déverrouillage reçu au regard de conditions de validation de déverrouillage et générer une instruction (43) de déverrouillage lorsque ledit indicateur de position reçu indique la position fermée et lesdites conditions de validation de déverrouillage sont remplies par ledit signal de demande de déverrouillage reçu (41, 411),
- au moins une sortie (10) adaptée à transmettre ladite instruction (43) de déverrouillage de ladite porte,
**caractérisé en ce que** :
- ladite au moins une entrée est adaptée à recevoir un signal de demande de reverrouillage (41, 412) de ladite porte temporellement dissociable d'un passage dudit indicateur de position (42) de la position ouverte à la position fermée,
- ledit au moins un processeur est configuré pour vérifier ledit signal de demande de reverrouillage reçu au regard de conditions de validation de reverrouillage et générer une instruction (43) de reverrouillage lorsque ledit indicateur de position reçu indique la position fermée et lesdites conditions de validation de reverrouillage sont remplies par ledit signal de demande de reverrouillage reçu,
- ladite au moins une sortie est adaptée à transmettre ladite instruction de reverrouillage de ladite porte.

2. Système de commande (1 ; 8) de déverrouillage selon la revendication 1, **caractérisé en ce que** ledit au moins un processeur est configuré pour générer une instruction (43) de reverrouillage de ladite porte (20) lorsque après transmission de ladite instruction de déverrouillage et en l'absence de réception dudit signal de demande de reverrouillage, ledit indicateur de position reçu (42) reste à la position fermée pendant une durée dépassant un premier délai prédéfini, appelé délai d'action (45).

3. Système de commande (1 ; 8) de déverrouillage selon la revendication 2, **caractérisé en ce que** ledit signal de demande de déverrouillage (41, 411) incluant au moins une information d'identification dudit espace clos (2) parmi au moins deux espaces clos, ledit au moins un processeur est configuré pour déterminer ledit délai d'action (45) prédéfini en fonction dudit espace clos.

4. Système de commande (1 ; 8) de déverrouillage selon l'une quelconque des revendications précédentes, **caractérisé en ce que** :
- ledit au moins un processeur est configuré pour générer un signal d'alerte (44) lorsque ledit indicateur de position reçu (42) passe de la position fermée à la position ouverte en absence de transmission de ladite instruction (43) de déverrouillage associée à ladite position fermée, et pour générer un signal d'alerte (44) lorsque après transmission de ladite instruction de déverrouillage et passage dudit indicateur de position reçu de la position fermée à la position ouverte, ledit indicateur de position reste à la position ouverte pendant une durée dépassant un deuxième délai prédéfini, appelé délai d'intervention (46),
- ladite au moins une sortie est adaptée à transmettre ledit signal d'alerte.

5. Système de commande (1 ; 8) de déverrouillage selon la revendication 4, **caractérisé en ce que** :
- ladite au moins une entrée est adaptée à recevoir un signal de demande (41, 413) de prolongation d'ouverture de ladite porte (20),
- ledit au moins un processeur est configuré pour vérifier ledit signal de demande de prolongation reçu au regard de conditions de validation de prolongation et pour remplacer ledit délai d'intervention (46) par un délai prolongé d'intervention (460) supérieur audit délai d'intervention lorsque lesdites conditions de validation de prolongation sont remplies par ledit signal de demande de prolongation reçu.

6. Système de commande (1 ; 8) de déverrouillage selon l'une des revendications 4 ou 5, **caractérisé en ce que** ledit signal de demande de déverrouillage (41, 411) incluant au moins une information d'identification de type d'intervention dans ledit espace clos (2) parmi au moins deux types d'intervention, ledit au moins un processeur est configuré pour déterminer ledit délai d'intervention prédéfini en fonction dudit type d'intervention dans ledit espace clos.

7. Système de commande (1 ; 8) de déverrouillage selon l'une quelconque des revendications précédentes, **caractérisé en ce que** ladite au moins une entrée, ledit au moins un processeur et ladite au moins une sortie sont adaptés pour communiquer à distance via au moins un premier réseau (T1) avec un dispositif de déverrouillage et de reverrouillage (22, 23) de ladite porte (20) et avec un détecteur (21) de ladite position de ladite porte parmi la position ouverte et la position fermée, et pour communiquer à distance via au moins un deuxième réseau (T2) distinct du premier réseau (T1) avec au moins une source (3) desdits signaux de demande de déverrouillage (41, 411) et de reverrouillage (41, 412) de ladite porte.

8. Système de commande (1 ; 8) de déverrouillage selon la revendication 7, **caractérisé en ce que** ledit au moins un premier réseau (T1) inclut un réseau étendu à basse consommation ou LPWAN.

9. Système de commande (1 ; 8) de déverrouillage selon l'une quelconque des revendications précédentes, **caractérisé en ce que** ledit espace clos (2) est une armoire de rue utilisée comme point de mutualisation d'un réseau de fibre optique.

10. Système de commande (1; 8) de déverrouillage selon l'une quelconque des revendications précédentes, **caractérisé en ce que** ledit signal de demande de déverrouillage (41, 411) de ladite porte (20) incluant des éléments d'identification dudit espace clos (2) et d'un technicien (3) en charge d'une intervention dans ledit espace clos, ledit au moins un processeur est configuré pour procéder en utilisant lesdits éléments d'identification à des vérifications d'identité dudit technicien et de validité de ladite intervention dans ledit espace clos.

11. Procédé de commande de déverrouillage d'une porte (20) d'un espace clos (2) mis en oeuvre par au moins un processeur (81) et comprenant :
- une réception (51) d'un signal de demande de déverrouillage (41, 411) de ladite porte, et d'un indicateur de position (42) de la ladite porte parmi une position ouverte et une position fermée prévu pour au moins identifier des transitions entre ladite position ouverte et ladite position fermée,
- une vérification (51) dudit signal de demande de déverrouillage reçu au regard de conditions de validation de déverrouillage et une génération (53) d'une instruction (43) de déverrouillage lorsque ledit indicateur de position reçu indique la position fermée et lesdites conditions de validation de déverrouillage sont remplies par ledit signal de demande de déverrouillage reçu (41, 411),
- une transmission (53) de ladite instruction de déverrouillage de ladite porte,
**caractérisé en ce que** ledit procédé de commande comprend :
- une réception (56) d'un signal de demande de reverrouillage (41, 412) de ladite porte temporellement dissociable d'un passage dudit indicateur de position (42) de la position ouverte à la position fermée,
- une vérification (56) dudit signal de demande de reverrouillage reçu au regard de conditions de validation de reverrouillage et une génération (55) d'une instruction (43) de reverrouillage lorsque ledit indicateur de position reçu indique la position fermée et lesdites conditions de validation de reverrouillage sont remplies par ledit signal de demande de reverrouillage reçu (41, 412),
- une transmission (55) de ladite instruction de reverrouillage de ladite porte,
ledit procédé de commande étant avantageusement mis en oeuvre par un système de commande (1 ; 8) conforme à l'une quelconque des revendications 1 à 10.

12. Programme d'ordinateur comprenant un code adapté à mettre en oeuvre le procédé de commande de la revendication 11 lorsque ledit programme est exécuté par un ordinateur.
